# EUROPEAN PATENT APPLICATION

(11) **EP 4 576 663 A1**
(43) Date of publication of application: **25.06.2025**
(21) Application number: 23218323.6
(22) Date of filing: 19.12.2023
(51) Int. Cl.: H04L 9/40, H04L 9/08, H04L 67/10

(54) **SYSTEMS, METHODS, AND COMPUTER PROGRAM PRODUCTS FOR DATA MANAGEMENT**

(71) Applicant: Helsing GmbH, 81671 Munich (DE)
(72) Inventor: Fink. Robert, 81671 Munich (DE); Baker, James, 81671 Munich (DE)
(74) Representative: Rummler, Felix

(57) **Abstract**

A computer-implemented method of data management, the method comprising: receiving, at a network gateway operating in a first confidential computing environment and configured to provide access to a shared computing environment, a request to upload a data set from a client in the first confidential computing environment to a file server in the shared computing environment; encrypting, by the network gateway, the data set; and uploading the encrypted data set to the file server.

## Description

### Technical Field

The present disclosure relates to systems, methods, and computer program products for data management. The disclosure is applicable in the field of storage of confidential data and data centre operation.

### Background

A frequent problem when storing confidential data is sharing data with a plurality of authorized users, while preventing access by non-authorized users.

For example, it may be desirable to allow a plurality of users, such as companies, to work together on a common data set, and at the same time prevent third parties from obtaining knowledge of the data. More particularly, it is desirable to enable the users to enable and disable access authorizations related to specific data sets and/or specific users. Known solutions lack flexibility and efficiency.

There is a need for systems and methods that overcome these shortcomings.

### Summary

Disclosed and claimed herein are systems, methods, and computer program products for data management.

A first aspect of the present disclosure relates to a computer-implemented method of data management. The method comprises the following steps:
- receiving, at a network gateway operating in a first confidential computing environment and configured to provide access to a shared computing environment, a request to upload a data set from a client in the first confidential computing environment to a file server in the shared computing environment;
- encrypting, by the network gateway, the data set; and
- uploading the encrypted data set to the file server.

The method allows sharing encrypted data in the shared computing environment. The data set is encrypted before being sent to the server, so that the file server and any other entity in the shared computing environment is prevented from obtaining knowledge of the data set. The shared data can be downloaded by a second client device in a second confidential computing environments, which may be similar to the first confidential computing environment. The method may include sharing, by an out-of-band connection a key suitable for decrypting the encrypted data set. The data set, which may be much larger than a key used to encrypt it, need only to be uploaded once to the file server and can be retrieved by any further client. This means that the amount of data to be transferred by the network gateway is reduced compared to transfer for a larger number of users.

In an embodiment, encrypting the data set includes encrypting, by the network gateway, the data set using a session key, preferably by a symmetric encryption algorithm. The method further comprises the following steps:
- encrypting, by the network gateway, the session key using a first public key; and
- uploading the encrypted session key to a key server in the shared computing environment.

The usage of a session key allows changing data access by re-encrypting the session key with a different public key. Also, the session key may be processed by a faster encryption algorithm. The session key may be different for different data sets. This increases the cryptographic strength of the encryption. Moreover, the confidential computing environment need not comprise high capacity storage devices. Since the maintenance of confidential infrastructure is associated with higher computational cost per amount of data, the method is therefore highly efficient. The public keys may be shared by a public key infrastructure comprised in or separate to the shared computing environment.

In another embodiment, the method further comprises the following steps:
- receiving, at the network gateway, a request to extend permissions related to one of the keys;
- encrypting, by the network gateway, the session key using a second public key different from the first public key to generate a second encrypted session key; and
- uploading the second encrypted session key to the key server.

This allows enabling access to the data by a further user who has control over a second private key associated to the second public key. It is not necessary to re-encrypt and re-transmit the full data set, which may be much larger than the session key.

In a further embodiment, the first public key and/or second public key is each associated with a respective private key stored in a key storage in the first confidential computing environment. Thereby, the first encrypted session key can be downloaded to the network gateway, decrypted by the private key, and re-encrypted by a second public key to generate second encrypted session key. Therefore, it is no longer needed to store the unencrypted session key in the first confidential computing environment. In embodiments, a large number of session keys may be used, each of which may be used to encrypt a specific data set. In this case, this feature allows storing the session keys only in encrypted form and only on the shared computing environment, i.e. less storage capacity is needed in the confidential environment.

In yet another embodiment, the method further comprises:
- receiving a request to revoke permissions related to one of the keys; and
- in response to the request, sending a control message to the key server to delete the encrypted session key.

This allows controlling the access to encrypted data in the shared computing environment, and allows preventing further data access to the uploaded encrypted data set. If the file server provides means for an authenticated server log, it may be determined, prior to sending the control message, whether the encrypted data has been accessed. If this is not the case, any user in possession of the key is prevented from having knowledge of the data.

A second aspect of the present disclosure relates to a computer-implemented method of data management. The method comprises the following steps:
- receiving, at a network gateway operating in a second confidential computing environment and configured to provide access to a shared computing environment, a request to download a data set from a file server in the shared computing environment to a client in the second confidential computing environment;
- downloading the encrypted data set from the file server; and
- decrypting, by the network gateway, the data set to generate a decrypted data set.

The first confidential computing environment may be identical to or different to the second confidential computing environment.

In an embodiment, the method further comprises downloading an encrypted session key from a key server in the shared computing environment. In this embodiment, decrypting the data set includes the following steps:
- decrypting, by the network gateway, the session key using a private key, preferably by a symmetric encryption algorithm to generate a decrypted session key;
- decrypting, by the network gateway, the data set using the decrypted session key.

In another embodiment, the data set has been uploaded to the file server by the method of the first aspect.

In another embodiment, the method further comprises caching the decrypted data for a predetermined time on a memory device in the second confidential computing environment. This allows a plurality of client devices to use the cached data repeatedly. For example, if the decrypted data are used for training a machine learning algorithms, they must be supplied to the algorithm for a large number of epochs, i.e. they must be reused in a foreseeable time. Caching thus avoids the need for repeatedly downloading and decrypting the data.

In a further embodiment, the private key and/or the public key are identical for a plurality of users. The method further comprises authenticating the user, preferably by identifying a first user among the plurality of users. This has the advantage that less keys have to be generated and stored, which saves compute power and space. This leads to an efficiency gain in case of a large number of users. Moreover, if it is desired to disable access by one or more users among the plurality of users, it is not necessary to generate a new key.

In yet another embodiment, the encrypting and/or decrypting the data set comprises applying a block cypher. Usage of a block cypher makes the encrypted data set seekable, such that it can be accessed more efficiently.

In yet a further embodiment, the shared computing environment comprises a computing environment on a different site than the first computing environment. This increases data integrity when the file and/or key servers are used as a redundant storage. Moreover, the shared computing environment may comprise larger infrastructure that is not available in the confidential computing environment.

All properties and embodiments that apply to the first aspect also apply to the second aspect.

A third aspect of the present disclosure relates to a system comprising one or more processors and one or more storage devices, wherein the system is configured to perform the computer-implemented method of the first and/or second aspect of the present disclosure.

A fourth aspect of the present disclosure relates to a computer program product for loading into a memory of the system. The computer program comprises instructions, that, when executed by a processor of the system, cause the system to execute a method of the first and/or second aspect of the present disclosure.

In an embodiment, a non-transitory computer-readable storage medium is provided that stores instructions executable by one or more processors. The instructions comprise any of the steps of a method of the first and/or second aspect of the present disclosure.

### Brief description of the drawings

The features, objects, and advantages of the present disclosure will become more apparent from the detailed description set forth below when taken in conjunction with the drawings in which like reference numerals refer to similar elements.
- Figure 1 shows a flow chart of a computer-implemented method 100 of data management.
- Figure 2 shows a flow chart of a computer-implemented method 200 of data management.
- Figure 3 shows a block diagram of a computing environments and systems for data management.

### Detailed description of the preferred embodiments

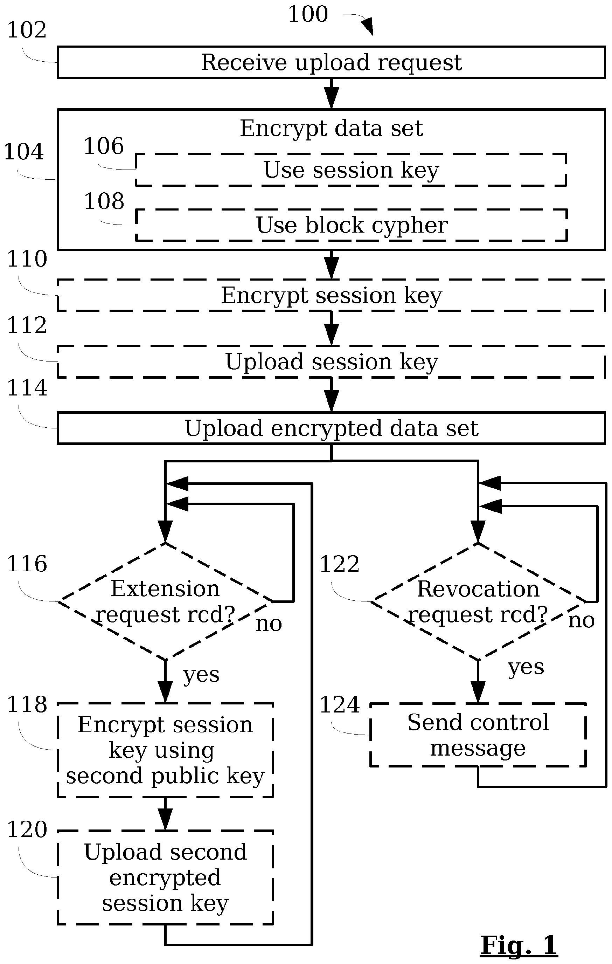

Figure 1 shows a flow chart of a computer-implemented method 100 of data management. The method 100 may be executed by a network gateway within a first confidential computing environment. The method 100 begins by receiving, 102, a request to upload a data set to a server within a shared infrastructure. The upload request may be received via an input device from a user. The upload request may be received by a client device within the first confidential computing environment. In response to the upload request, the data are encrypted, 104, at the network gateway. In principle, any known encryption algorithm may be used. For example, the step of encrypting the data set may be executed by an encryption tool according to an established standard and/or certified for official secrets, such as GnuPG VS. Such a tool may be encapsulated in the network gateway. It is preferred to use, 106 a session key related to the data set. This has the advantage that the cryptographic strength is increased as subsequent data sets may be encrypted by a different session key. It is preferred to use a respective session key for each data set. Moreover, it is preferred to use, 108, a block cypher. This has the advantage that the encrypted data supports seek operations. This enables access of a position defined by a byte offset in the data once it is encrypted.

Optionally, the session key is encrypted, 110, and uploaded to the file server in the shared computing environment, 112. The session key is then accessible by other users and need not be transmitted by an out-of-band communication channel.

It is preferred to obtain a public key pertaining to a public-private key pair, and to encrypt the session key and/or the data by the public key. This enables a user or client that stores the corresponding private key to access the data. For this purpose, a public key infrastructure (PKI) may be used.

At 114, the encrypted data set is uploaded to a file server in the shared computing environment. The data are then accessible by users of the shared environment.

Optionally, the method may include the following two other procedures which are executed in response to a specific request.

If, 116, a request for extension of access permissions to the encrypted data set, is received, the gateway executes steps 118 and 120. The request for extension of access permissions may be received from a client device of an authorized user, such as a system administrator, within the first confidential computing environment. The request is directed at enabling access by a second user or second client device that stores a second key different from the keys used to encrypt the data set. The second key preferably includes a key pair including a second public key. At 118, the network gateway encrypts the session key using the second public key. At 120, the network gateway uploads the session key to the server. Then, the second user is able to download the second encrypted session key and decrypt it using the private key related to the second public key.

In other words, the access permissions to the encrypted data set have been extended to the second user without downloading, decrypting, and encrypting the data set. Moreover, the second user need not have access to the key used to encrypt the session key. Therefore, different users each can have their own keys which need not be shared. This decreases the risk to the data in case of a security breach, such as a key becoming known to an unauthorized person.

If, 122, a request to revoke an access permission to the encrypted data set, the gateway sends, 124, a control message to the file server in the shared environment, to delete the second encrypted session key. Subsequently, the second user cannot access the data from the file server as far as he has not copied the second encrypted session key yet. This is advantageous if the file server in the shared environment comprises a tamper-proof logging mechanism that allows subsequent assessment which data the second user can have had in possession, and/or if technical or administrative measures of the shared infrastructure prevent downloading all session keys at once.

The procedures of extending and revoking access permissions are transparent in that the system administrator is enabled to set access permissions similarly to access permissions in multi-user file systems, the network gateway executes steps 118, 120, and/or 124 without manual intervention by the system administrator.

The step of encrypting the data set may be executed by an encryption tool according to an established standard and/or certified for official secrets, such as GnuPG VS. Such a tool may be encapsulated in the network gateway.

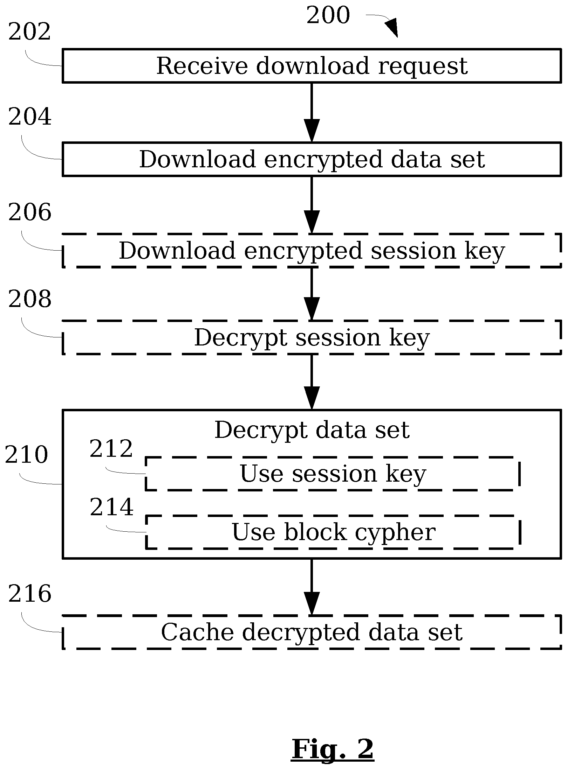

Figure 2 shows a flow chart of a computer-implemented method 200 of data management. Method 200 may be executed by a device controlled by a second user that has access permissions to the data set. It is preferred to execute the method 200 by a network gateway within a second confidential computing environment. The second confidential computing environment may be different or identical to the first computing environment. The method 100 begins by receiving, 202, a request to download the data set. Optionally, a user from which the request originates is authenticated, 204. Authentication may be done using a hardware token. In embodiments, the request relates to only a part of the data set, such as an individual file in the data set identified by an offset included in the download request. At step 206, the network gateway downloads the encrypted data set or part thereof to the second confidential computing environment. If it is determined by the network gateway that there is an encrypted session key associated with the data set, the encrypted session key is also downloaded, 208, and decrypted, 210. At 212, the data set is decrypted and may then be processed. If a session key was decrypted, the session key is used, 214, for decrypting the data set. A block cypher may be used, 216, for decrypting only a part of the data set, such as a block designated by an offset included in the download request.

At optional step 218, the decrypted data set is cached for a predetermined time interval by a storage device in the second confidential environment to allow processing the data multiple times. For example, the data set may comprise training data for a machine learning algorithm. In this case, the data can be used during the predetermined time interval for training the machine learning algorithm for a plurality of epochs without decrypting the data set each time.

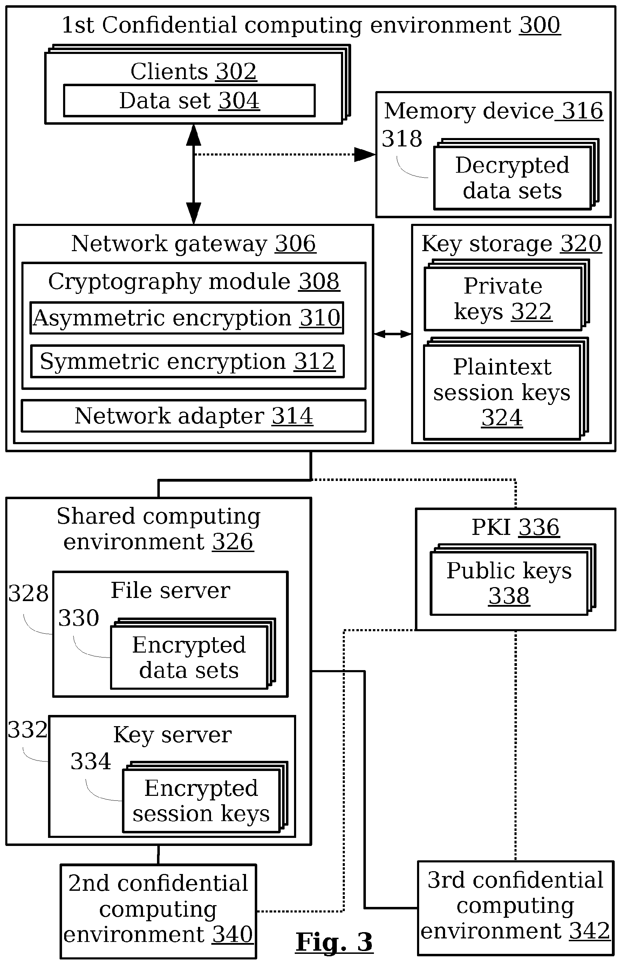

Figure 3 shows a block diagram of computing environments and systems for data management.

In this example, three confidential computing environments 300, 340, 342 share a shared computing environment 326. The three confidential computing environments 300, 340, 342 may be similar or identical and comprise network gateways such as network gateway 306 that is operable to conduct methods 100 and 200. Embodiments can include, in principle, any number of confidential computing environments. The confidential computing environments are preferably protected from access by any device outside, e.g. by a firewall (not shown) or other suitable technology.

However, data uploaded to the shared computing environment from the first confidential computing environment 300 can be accessed from within the second or third computing environment, so that data is distributed. The data can also be accessed by devices in the first confidential computing environment 300, such that the shared computing environment 326 is used to extend the storage capacity of the first confidential computing environment 300. The features described below are applicable to both cases.

In an exemplary use case, each confidential computing environment is operated by an organization, such as a company. The organizations use the shared computing environment to use data together, and for each data set, the organization from whose confidential computing environment the data was uploaded can enable any other organization to access the data or prevent it from doing so. Since the file server 328 and the key server 332 in the shared computing environment 326 are accessible for read and write access (solid lines) from each of the confidential computing environments 300, 340, and 342, data can be distributed by each with one upload only.

The first confidential computing environment may comprise one or more clients 302. Clients may include workstation computers that are operable by users, and that include systems for authenticating users, such as hardware security modules, or security software. A client 302 is communicatively coupled to the network gateway 306. The client 302 can send a data set 304 to the network gateway, together with a request to upload the data set 304 to a shared computing environment 326 and to make the data accessible to one or more of the confidential computing environments 300, 340, and/or 342. It is preferred to make the data accessible to the confidential computing environment 300 from which the data set was uploaded, so that no plaintext copy of the data set need be saved on any device in the first confidential computing environment. Thereby, more sensitive data can be stored in less classified infrastructure. The method is not specific to a special type of encryption algorithm, so an algorithm can be chosen that fits a given standard.

The network gateway 306 comprises a cryptography module 308 that can execute the encryption and decryption operations of methods 100 and 200. It is preferred to implement a symmetric encryption algorithm 312 for encrypting the data set 304 using a session key 324 to obtain fast encryption at high cryptographic strength. The symmetric encryption algorithm 312 preferably includes a block cypher, so that the encrypted data remains seekable. It is preferred to generate a new session key for each newly uploaded data set to generate variety in the keys, which improves cryptographic security.

The network gateway 306 may further implement an asymmetric encryption algorithm 310 to encrypt the session key using one or more public keys 338. Each of the public keys 338 is associated with a private key 322 stored in a key storage 320 of a computing environment, such that data encrypted using the public key can be decrypted using the associated private key 322. The public keys can be distributed using a public key infrastructure 336. In alternative embodiments, the public keys are directly exchanged between the confidential computing environments. The network gateway 306 uploads the encrypted session keys 334 to key server 332, and the encrypted data set 330 to the file server 328. The file server 328 and the key server 332 can be separate devices or functionalities implemented on one device, such as different buckets on a server.

Optionally, the session key 324 can be stored as plaintext data in key storage 320. In case the data set is downloaded, the stored session key 324 can be used to decrypt the data set. Alternatively, the session key is discarded. In this case, the encrypted data set can be decrypted by downloading and decrypting the encrypted session key 334, and decrypting the data set 330 by the decrypted session key. However, the use of asymmetric encryption is optional. Alternatively, the keys can be exchanged between the computing environments via an out-of-band channel.

The usage of a session key 324 has the advantage that it allows changing data access by re-encrypting the session key with a different public key. Also, the session key may be processed by a faster encryption algorithm. The session key can be different for different data sets. This increases the cryptographic strength of the encryption. This also has the effect that the data set need not be uploaded again, thereby saving transfer bandwidth and storage space.

The network gateway 306 can also be used to allow a further confidential computing environment 342 access to an encrypted data set of the encrypted data sets 330. To do so, an authenticated user may give an input to a client 302 to grant such permission. In this case, the client 302 sends a request to extend permissions no the network gateway 306. The network gateway then retrieves the session key corresponding to the data set, either from key storage 320 or by downloading and decrypting the session key from key server 332. The network gateway 306 then downloads the public key related to the further confidential computing environment 342 from the public key infrastructure 336 and uses it to encrypt the session key. Finally, the network gateway 306 uploads, via network adapter 314, the encrypted session key to the key server 332.

From that moment on, a user having access to the third confidential computing environment 342 can download the data set and the corresponding session key, decrypt the session key using the private key associated with the public key, and subsequently decrypt the data set using the decrypted session key. Since the session key, which may comprise an SHA256 key, preferably has a small fixed size, encrypting/decrypting it requires only limited compute time, compared to the generally much larger data sets. Thereby, the number of calculations, and thus the CPU time, necessary for adding this access possibility is preferably lower than decrypting and encrypting the entire data set. In embodiments, a large number of session keys may be used, each of which may be used to encrypt a specific data set. In this case, this feature allows storing the session keys only in encrypted form and only on the shared computing environment, so that less storage capacity is needed in the confidential environment.

It is preferred to use a memory device 316 in the confidential computing environment 300 to cache recently decrypted data sets for a predetermined time. The predetermined time may be chosen such that it corresponds to a typical usage time. For example, if a data set, e.g. training data for a machine learning algorithm operated on a client device 302, is used in the confidential computing environment 300 typically for 2 hours, then the data may be cached in memory device 316 for that time. For example, during this time, a plurality of clients 302 may use the decrypted data set hundreds of times for different training epochs. Caching then avoids decrypting the data each time.

The network gateway 306 can also be used to revoke access permissions. In this case, a user deciding to revoke access permissions of, e.g., the third confidential computing environment, can give a corresponding input to client device 302. The client device 302 sends a request to revoke the access permission of the third confidential computing environment 342 to one of data sets 330 to the network gateway 306. Network gateway 306 sends a control message to the key server 332 instructing the server 332 to delete the session key 334 that was used to encrypt the data set and that was itself encrypted using the public key corresponding to the third confidential computing environment 342. Afterwards, the third confidential computing environment 342 cannot decrypt the data set anymore.

Moreover, security may be further increased by decrypting session keys and re-encrypting them with new public keys. This is preferred if the public keys have a date of expiry. The advantage is that the data sets themselves need not be re-encrypted.

The public keys 338 and corresponding private keys are preferably managed at the granularity of the computing environments 300, 340, 342. This allows setting the access permissions without knowledge of individual client devices and/or users within computing environments. By contrast, the management of access rights of individual clients or users is done internally within the confidential computing environment, which simplifies the process significantly because no knowledge on clients needs to be shared across confidential computing environments.

It is preferred to have the shared computing environment 326 off-site. This allows increasing data integrity. Moreover, a large data centre may be used for running file server 328. This is particularly advantageous if data have to be stored in the confidential computing environment only if they are plain text.

### Reference signs

- 100: Computer-implemented method of data management
- 102-124: Steps of method 100
- 200: Computer-implemented method of data management
- 202-218: Steps of method 200
- 300: First confidential computing environment
- 302: Clients
- 304: Data set
- 306: Network gateway
- 308: Cryptography module
- 310: Asymmetric encryption
- 312: Symmetric encryption
- 314: Network adapter
- 316: Memory device
- 318: Decrypted data sets
- 320: Key storage
- 322: Private keys
- 324: Plaintext session keys
- 326: Shared computing environment
- 328: File server
- 330: Encrypted data sets
- 332: Key server
- 334: Encrypted session keys
- 336: Public Key Infrastructure (PKI)
- 338: Public keys
- 340: Second confidential computing environment
- 342: Third confidential computing environment

## Claims

1. A computer-implemented method of data management, the method comprising:
receiving, at a network gateway (306) operating in a first confidential computing environment (300) and configured to provide access to a shared computing environment (326), a request to upload a data set (304) from a client (302) in the first confidential computing environment (300) to a file server (328) in the shared computing environment (326);
encrypting, by the network gateway (306), the data set (304); and
uploading the encrypted data set (330) to the file server (328).

2. The method of claim 1, wherein encrypting the data set (304) includes encrypting, by the network gateway (306), the data set (304) using a session key (324), preferably by a symmetric encryption algorithm (312); the method further comprising:
encrypting, by the network gateway (306), the session key (324) using a first public key (338); and
uploading the encrypted session key (324) to a key server (334) in the shared computing environment (326).

3. The method of claim 2, further comprising:
receiving, at the network gateway (306), a request to extend permissions related to one of the keys;
encrypting, by the network gateway (306), the session key (324) using a second public key different from the first public key (338) to generate a second encrypted session key (334); and
uploading the second encrypted session key (334) to the key server (334).

4. The method of claim 2 or 3, wherein the first public key and/or second public key is each associated with to a respective private key (322) stored in a key storage (320) in the first confidential computing environment (300).

5. The method of any of the preceding claims, further comprising:
receiving a request to revoke permissions related to one of the keys; and
in response to the request, sending a control message to the key server (334) to delete the encrypted session key (334).

6. A method of data management, the method comprising:
receiving, at a network gateway (306) operating in a second confidential computing environment (340) and configured to provide access to a shared computing environment (326), a request to download an encrypted data set (330) from a file server (328) in the shared computing environment (326) to a client (302) in the second confidential computing environment (340);
downloading the encrypted data set (330) from the file server (328); and
decrypting, by the network gateway (306), the encrypted data set (330) to generate a decrypted data set (318).

7. The method of claim 6, further comprising downloading an encrypted session key (334) from a key server (334) in the shared computing environment (326), and wherein decrypting the encrypted data set (330) includes:
decrypting, by the network gateway (306), the encrypted session key (334) using a private key (322), preferably by a symmetric encryption algorithm, to generate a decrypted session key; and
decrypting, by the network gateway (306), the encrypted data set (330) using the decrypted session key (324).

8. The method of claim 6 or claim 7, further comprising caching the decrypted data set (318) for a predetermined time on a memory device (316) in the second confidential computing environment (340).

9. The method of any of claims 6-8, wherein the encrypted data set (330) has been uploaded to the file server (328) by the method of any of claims 1-5.

10. The method of any of the preceding claims,
wherein the private key (322) and/or the first and/or second public key (338) are identical for a plurality of users; and
wherein the method further comprises authenticating the user, preferably by identifying a first user among the plurality of users.

11. The method of any of the preceding claims, wherein the encrypting and/or decrypting the encrypted data set (330) comprises applying a block cypher.

12. The method of any of the preceding claims, wherein the shared computing environment (326) comprises a computing environment on a different site than the first computing environment.

13. A system comprising one or more processors and one or more storage devices, wherein the system is configured to perform the computer-implemented method of any one of claims 1-12.

14. A computer program product for loading into a memory of a computer, comprising instructions, that, when executed by a processor of the computer, cause the computer to execute a computer-implemented method of any of claims 1-12.
